# EUROPEAN PATENT APPLICATION

(11) **EP 1 224 974 A1**
(43) Date of publication of application: **24.07.2002**
(21) Application number: 00966451.7
(22) Date of filing: 13.10.2000
(51) Int. Cl.: B01J 35/04, B01D 53/94, F01N 3/28

(54) **AUTOMOBILE EXHAUST GAS CLEANING CATALYST METAL CARRIER AND PRODUCTION METHOD THEREFOR**

(30) Priority: 14.10.1999 JP 29263699; 27.07.2000 JP 2000226789
(71) Applicant: Nippon Steel Corporation, Tokyo 100-0004 (JP); FUJI JUKOGYO KABUSHIKI KAISHA, Tokyo 160-0023 (JP)
(72) Inventor: OKAZAKI, Yuichi, Nippon Steel Corp. Nagoya works, Tokai-shi, Aichi 476-0015 (JP); KASUYA, Masayuki, Tokai-shi, Aichi 476-0015 (JP); SUZUKI, Atsushi, Shinjuku-ku, Tokyo 160-0023 (JP); YAMAKAWA, Yoshihiro, Shinjuku-ku, Tokyo 160-0023 (JP); TAMURA, Hideki, Shinjuku-ku, Tokyo 160-0023 (JP)
(74) Representative: VOSSIUS & PARTNER
(86) International application number: JP0007095
(87) International publication number: WO0126808

(57) **Abstract**

The metal carrier for the exhaust gas purifying catalyst has durability that can endure the high-temperature and high-speed exhaust gas flow and that has anti-thermal-fatigue characteristics for withstanding rapid heating and cooling, and which excels in purifying performances.

A metal carrier for an exhaust gas purifying catalyst is provided with a metal honeycomb member having a flat metal foil and a corrugate-processed metal foil piled and wound around in spiral form, and a metal outer tube surrounding this metal honeycomb member. A free-flat-foil is provided at the beginning of winding of the metal foil. And a tubular hollow portion of the honeycomb member in the radial or chord direction is processed either, or by pushing and pressurizing along the innermost circumference portion of the honeycomb member. When the outer diameter of the honeycomb member is ϕA, and the inner diameter thereof is ϕB, it is made to be ϕB ≤ 10/100 × ϕA.

## Description

### FIELD OF THE INVENTION

The present invention relates to a metal carrier for carrying catalysts that purify exhaust gases including NO_{X}, HC, CO, and the like by contacting with thereof. Particularly, the present invention relates to the metal carrier installed on an exhaust gas system of an automotive engine. The metal carrier supports carries the aforementioned catalysts for functioning sufficiently, and has not only a sufficient strength against pressures of high-temperature exhaust gases or vibrations from the engine but also provided with sufficient anti-thermal-fatigue characteristics to withstand severe temperature changes.

### BACKGROUND ART

Twenty years have passed since the implementation of the exhaust gas regulations, and at present, countermeasures against exhaust gas are done by improvement of engines for purifying the exhaust gas with catalysts. The mainstream of catalyst development for purifying the exhaust gases is the structure made from precious metal catalysts like platinum(Pt) carried on top of such a ceramic honeycomb as cordierite wash-coated by γ-alumina powder. But the ceramic honeycomb had such drawbacks as having a rather high exhaust resistance, or having a low operating temperature because of a limitation of a heat resistant characteristics of a shock absorbing stainless steel mesh inserted between the honeycomb and an outer tube to prevent a destruction of the honeycomb.

Metal carriers composed of stainless steel foil have become the mainstream in improving thereof in recent times. The metal carriers are generally constituted by the honeycomb formed by laminating or winding a flat metal foil (flat foil) and a corrugate-processed metal foil (corrugated foil), and a metal tube that accommodates the honeycomb. But the foils are required to have not only high-temperature-strength and oxidation-resistant characteristics to withstand the high-temperature and high-speed exhaust gas in reaction but also anti-thermal-fatigue characteristics to withstand the heating and cooling.

The connecting method of the honeycomb, the metal tube and the honeycomb needs to be improved in order to have the metal carrier to withstand a higher temperature and higher speed of the exhaust gas. Prior arts for those objectives are Japanese Patent Laid-open Publications No. Sho. 61-199574, No. Sho. 62-160728, Japanese Utility model Laid- open Publication No. Sho. 62-194436, Japanese Patent Laid-open Publications No. Sho. 62-273050, No. Hei. 2-102744, No. Hei. 4-71648, and No. Hei. 5-93545.

### DISCLOSURE OF THE INVENTION

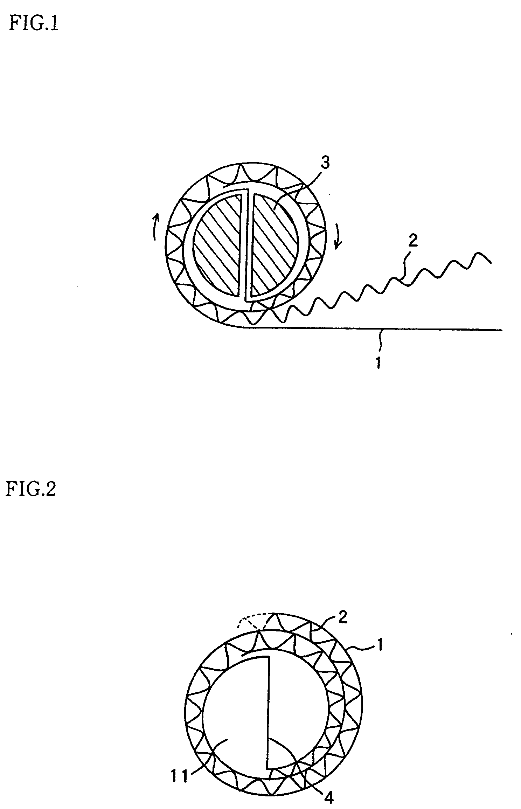

In metal carriers disclosed in each of the above-mentioned publications, it is stated that a junction structure by a metal carrier is the most preferred structure for an automotive exhaust gas purification, from viewpoints of a thermal stress diffusion, and prevention of a fall-off of the honeycomb due to an erosion of the honeycomb caused by an accidental fire of an engine. However, all of the metal carriers disclosed in the above-mentioned publications with the type of honeycomb structures in which a flat foil and a corrugated foil are wound in spiral form, as shown in FIG. 1, use an axis core half-divided by a partitioning slit along the centerline of the axis core, and insert a front end of the flat foil into the partitioning slit of the axis core and start the winding, in most cases from the manufacturing viewpoint, at the winding-start portion (central portion). In a state of having extracted the axis core after the winding-process has been completed, the flat foil inserted into the partitioning slit at the start of the winding is exposed as a free-flat-foil having about the same length as the diameter of the axis core, and radially traversing a tubular hollow portion at the center of the honeycomb member. Such free-flat-foil exposed in the tubular hollow portion had drawbacks, in that it was prone to fluttering and vibration in a strong and high-temperature exhaust gas flow, and prone to chipping and loss, since there were no surrounding constraints, which was different from the other honeycomb portions. Once a chipping-and-loss, or a crack is generated on a portion of such free-flat-foil, a dispersion of the chipped-and-lost free-flat-foil, or a propagation of the cracks in all directions occurs in a small scale, or occurs all at once, and the foil material constituting the honeycomb member falls-off to the exit direction of the exhaust gas flow. Such fall-off of the foil material shortens the service life durability of the metal carrier, or causes a decrease in purifying performance of the exhaust gas, and furthermore, it has a possibility of interfering with other automotive parts towards the rear direction of the metal carrier exit.

As a prior art in maintaining the durability of the central portion formed at the beginning of the winding of the honeycomb, there was Japanese Patent Laid-open Publication No. Sho. 63-137756, for example, in which a metal carrier was proposed that had a construction provided with a corrugated thin sheet surrounding the central region with no winding members as the innermost layer of the metal carrier. In Japanese Utility model Laid-open Publication No. Hei. 2-142625, a metal carrier was proposed, in which the outermost peripheral surface of the metal carrier was connected to the inner peripheral surface of the tubular metal case, and in which the diameter ϕB of the tubular hollow portion at the center of this metal carrier was made to be a prescribed value (20/100) ϕA ≤ ϕB ≤ (95/100) ϕA, in relation to the outer diameter ϕA, and which had a structure with the inner wall of the aforementioned tubular hollow portion supported by a tube made of metal. However, there were problems with these proposals. In the former proposal, there was a problem of chipping-and-loss occurring because it could not endure the high-temperature, high-speed exhaust gas flow, since one side of the corrugated foil in the central portion was soldered, while the other side was left in a free state, and its drawback was insufficient durability. In the latter proposal, it worked fine with two-wheeled vehicles, but with four-wheeled vehicles, the purifying surface area was too small due to the diameter of the tubular hollow portion being too big, and the purifying performance was low for a catalyst metal carrier, and not appropriate as a metal carrier for exhaust gas purifying catalysts for four-wheeled vehicles.

The present invention was made to solve the above-mentioned conventional problems, and provides a metal carrier for automotive exhaust gas purifying catalysts with durability that can endure the high-temperature and high-speed exhaust gas flow, and durability from having anti-thermal-fatigue characteristics that can endure rapid heating and cooling, and which excels in purifying performances. In other words, the object of this invention is to improve the durability of the honeycomb member itself, and protect automotive parts in the downstream side, by appropriately processing the free-flat-foil, which is the winding-start portion existing in the tubular hollow portion of the honeycomb member, and existing mainly for the convenience of the manufacturing process, and also by preventing a generation of cracks, and chipping-and-loss.

The outline of the present invention is as follows:
(1) A metal carrier for an automotive exhaust gas purifying catalyst characterized in that, it is provided with a metal honeycomb member having a flat metal foil and a corrugate-processed metal foil piled and wound around in spiral form, and a metal outer tube surrounding this metal honeycomb member. The aforementioned honeycomb member is composed by hollowing out and removing a free-flat-foil, which is used at the beginning of the winding of the metal foil, and traversing a tubular hollow portion of the aforementioned honeycomb member in a radial or chord direction, and ϕB is set such that ϕB ≤ 10/100 × ϕA, where an outer diameter of the aforementioned honeycomb member is ϕA, and an inner diameter thereof is ϕB.
(2) The metal carrier for an automotive exhaust gas purifying catalyst according to the above-mentioned (1), wherein at least an innermost layer of the aforementioned honeycomb member is soldered and united, along one portion or the whole portion of a contacting surface in an axial direction of the aforementioned honeycomb member, after the free-flat-foil in the tubular hollow portion of the aforementioned honeycomb member is mechanically processed in the axial direction, and hollowed out and removed.
(3) A metal carrier for an automotive exhaust gas purifying catalyst characterized in that, it is provided with a metal honeycomb member having a flat metal foil and a corrugate-processed metal foil piled and wound around in spiral form, and a metal outer tube surrounding this metal honeycomb member. The aforementioned honeycomb member is composed by pushing and pressurizing a free-flat-foil, which is used at the beginning of the winding of the metal foil, and traversing a tubular hollow portion of the aforementioned honeycomb member in a radial or chord direction, along an innermost circumference portion, and ϕB is set such that ϕB ≤ 10/100 × ϕA, where an outer diameter of the aforementioned honeycomb member is ϕA, and an inner diameter thereof is ϕB.
(4) The metal carrier for an automotive exhaust gas purifying catalyst according to the above-mentioned (3), wherein at least an innermost layer of the aforementioned honeycomb member including the aforementioned flat foil is soldered and united, along one portion or the whole portion of the contacting surface in an axial direction of the aforementioned honeycomb member, after the free-flat-foil in the tubular hollow portion of the aforementioned honeycomb member is pushed and pressurized along the innermost peripheral portion.
(5) The metal carrier for an automotive exhaust gas purifying catalyst according to the above-mentioned (3) or (4), wherein the free-flat-foil traversing the tubular hollow portion of the aforementioned honeycomb member is eccentric in relation to the tubular hollow portion.
(6) A metal carrier for an automotive exhaust gas purifying catalyst characterized in that, it is provided with a metal honeycomb member having a flat metal foil and a corrugate-processed metal foil piled and wound around in spiral form, and a metal outer tube surrounding this metal honeycomb member. The aforementioned honeycomb member has a free-flat-foil, which is used at the beginning of the winding of the metal foil, and traversing a tubular hollow portion of the aforementioned honeycomb member in the radial or chord direction, at least an innermost layer of the aforementioned honeycomb member is soldered and united along one portion or the whole portion of a contacting surface in an axial direction of the aforementioned honeycomb member, and ϕB is set such that ϕB ≤ 10/100 × ϕA, where an outer diameter of the aforementioned honeycomb member is ϕA, and an inner diameter thereof is ϕB.
(7) The metal carrier for an automotive exhaust gas purifying catalyst according to any one of the above-mentioned (1) to (6), wherein an intermediate tube is provided between the aforementioned honeycomb member and the aforementioned outer tube, and the aforementioned honeycomb member and the aforementioned intermediate tube are composed so that they are soldered at a soldered portion at one end in the axial direction of the metal carrier, and.the aforementioned intermediate tube and the aforementioned outer tube are composed so that they are soldered at a soldered portion at the other end in the axial direction of the metal carrier.
(8) A manufacturing method of a metal carrier for an automotive exhaust gas purifying catalyst, the carrier for automotive exhaust gas purifying catalysts being provided with a metal honeycomb member having a flat metal foil and a corrugate-processed metal foil piled and wound around in spiral form, and a metal outer tube surrounding this metal honeycomb member, characterized in that the aforementioned honeycomb member is a metal honeycomb member having an outer diameter of ϕA, and having a tubular hollow portion in an innermost circumference with an inner diameter of ϕB, where ϕB is set such that ϕB ≤ 10/100 × ϕA, and in that the method includes the steps of starting the winding of the metal foils by inserting a front end of the flat foil into a partitioning slit of an axis core having the partitioning slit, removing the axis core after the completion of the winding, and cutting-off and removing a free-flat-foil, which has been the flat foil inserted into the aforementioned partitioning slit and exposed in a tubular hollow portion.
(9) A manufacturing method of a metal carrier for an automotive exhaust gas purifying catalyst, the carrier for automotive exhaust gas catalysts being provided with a metal honeycomb member having a flat metal foil and a corrugate-processed metal foil piled and wound around in spiral form, and a metal outer tube surrounding this metal honeycomb member, characterized in that the aforementioned honeycomb member is a metal honeycomb member having an outer diameter of ϕA, and having a tubular hollow portion in the innermost circumference with an inner diameter of ϕB, where ϕB is set such that ϕB ≤ 10/100 × ϕA, and in that the method includes the steps of starting the winding of the metal foils by inserting a front end of the flat foil into a partitioning slit of an axis core having the partitioning slit, removing the axis core after the completion of the winding, and pressing a free-flat-foil, which was the flat foil inserted in the aforementioned partitioning slit and exposed in a tubular hollow portion, against the tubular hollow portion in an innermost circumference of the honeycomb member.
(10) The manufacturing method of a metal carrier for an automotive exhaust gas purifying catalyst according to the above-mentioned (9), wherein at least an innermost layer of the aforementioned honeycomb member including the pressed portion of the aforementioned free-flat-foil in the innermost circumference of the honeycomb member, is soldered and united along one portion or the whole portion of a contacting surface in an axial direction.
(11) The manufacturing method of a metal carrier for an automotive exhaust gas purifying catalyst according to the above-mentioned (9) or (10), wherein the aforementioned axis core is an eccentric axis core, with the partitioning slit installed eccentric to the center of the axis core.

### BRIEF DESCRIPTION OF THE DRAWINGS

FIG. 1 is a drawing showing a state right after starting to wind a flat foil and a corrugated foil in a metal carrier;
FIG. 2 is a partial view showing a free-flat-foil in a center portion of the metal carrier;
FIG. 3 includes partial views showing the center portion of the metal carrier, wherein (a) is a drawing showing the state during the removal of a free-flat-foil, and (b) is a drawing showing the state after the removal;
FIG. 4 (a) is a drawing showing the state right after the start to wind by using an eccentric axis core, (b) is a partial view showing the state of the center portion of the metal carrier that has been manufactured using the eccentric axis core, and (c) is a drawing showing a pressed state of the free-flat-foil;
FIG. 5 includes drawings showing the center portion of the metal carrier, wherein (a) is a drawing showing the state with the free-flat-foil pressed, and (b) is a partial view showing the soldered state of the free-flat-foil;
In FIG. 6, (a) is a general schematic view of the metal carrier, (b) is a sectional view taken along the A-A line in (a) and shows a soldered portion and a non-soldered portion of the honeycomb member,
   and (c) is a longitudinal section view of the tubular metal carrier in the direction orthogonal to the axial direction, seen from the B-B position; and
FIG. 7 is a sectional view of the metal carrier.

### (EXPLANATION OF THE NUMERALS)

1: flat foil, 2: corrugated foil, 3: axis core, 4: free-flat-foil,
5: free-flat-foil burr, 6: eccentric axis core, 8: outer tube, 9: intermediate tube,
11: tubular hollow portion, 13a: soldered portion, 13b: non-soldered portion,
14: cutting tool, 15: pressing, 16: soldered portion, 17: gas flow direction
H: honeycomb member

### BEST MODE FOR CARRYING OUT THE INVENTION

Embodiments of the present invention will be described specifically, based on the drawings.

FIG. 1 is a drawing showing the manufacturing process of a metal carrier and an axis core 3 with a half-dividing partitioning slit of approximately 5mm in diameter, when winding a corrugated foil 2 around a flat foil 1 in spiral form. The winding is started with an end portion of the flat foil 1 being inserted into the partitioning slit of the axis core 3, and the corrugated foil 2 is also wound up, and a honeycomb member H is completed by repeating these windings.

In manufacturing the honeycomb member H, it is necessary to make the metal honeycomb member so that the member H is decided as ϕB ≤ 10/100 × ϕA, i.e., the outer diameter of the metal carrier is ϕA, and the inner diameter of the same is ϕB, and also it is necessary to make the member H a hollow metal honeycomb member provided with a tubular flat foil of ϕB in diameter at the innermost circumference thereof. This is because, when ϕB is bigger than 10/100 × ϕA, the purifying surface area will be too small due to the diameter of the tubular hollow portion being too big, and the purifying performance will be low for a catalyst carrier, and will not be appropriate as a metal carrier for exhaust gas purifying catalysts of vehicles.

The aforementioned half-divided axis core 3 is extracted, when the aforementioned winding process has been completed. After the extraction, a tubular hollow portion 11 is formed at the central portion of the honeycomb construction, as shown in FIG. 2, and a free-flat-foil 4 will remain in the tubular hollow portion 11, traversing the hollow portion in the radial direction. The free-flat-foil 4 is the front-end portion of the flat foil 1 used at the start of the winding, and is the portion that has been inserted into the partitioning slit of the axis core, when the winding around of the metal foil was started. Conventionally, the metal carrier was fixed to the central portion in this state, by soldering or diffusion connection. But the free-flat-foil 4 is prone to chipping and loss due to fluttering caused by high-speed exhaust gas flow, in this state.

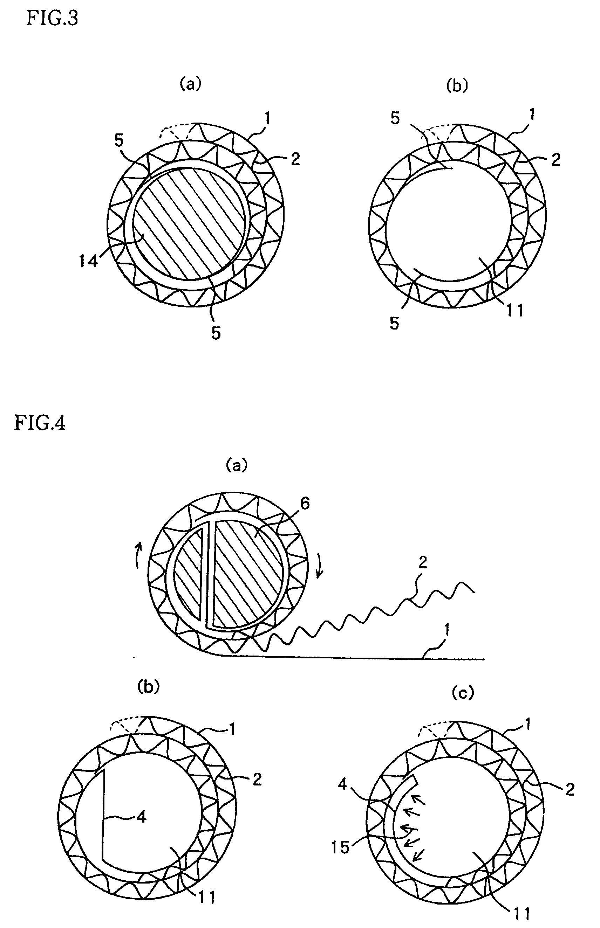

Hence, in the present invention, the free-flat-foil 4 exposed in the tubular hollow portion can be minimized, by cutting and removing the aforementioned free-flat-foil 4 with mechanical means that uses cutting tools 14 such as drills with approximately the same diameter as the outer diameter of the aforementioned axis core 3, as shown in FIG. 3(a), after extracting the half-divided axis core 3. This method is so simple and easy that the work can be effectively done in a short time.

There are cases in which the free-flat-foil 4 cannot be removed completely even with the above-mentioned method. And if any residues remain as free-flat-foil burrs 5, there are possibilities that the burr portions become the starting point of cracks generating and cost goes up due to the increase in working-processes for the removal of the burrs. Hence it is not a perfect disposal of the aforementioned free-flat-foil 4.

As mentioned above, the free-flat-foil burr is soldered and united to the innermost layer of the hollow tubular portion 11, by soldering and uniting at least one innermost layer (the innermost layer) of the aforementioned hollow metal honeycomb member, along one portion or the whole portion of the contacting surface in the axial direction of the aforementioned hollow metal honeycomb member, after the free-flat-foil 4 is mechanically processed in the axial direction, and hollowed out and removed. Thereby, the durability of the honeycomb member is improved. It should be noted that, general methods could be adopted for soldering methods as publicly known.

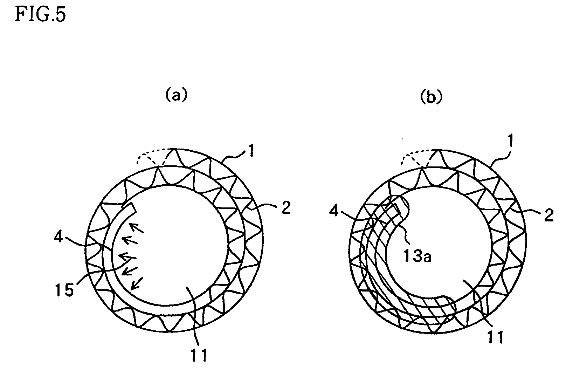

In the present invention, when the free-flat-foil 4 in the tubular hollow portion 11 of the aforementioned hollow metal honeycomb member is pushed and pressurized along the innermost circumference portion, as shown in FIG. 5(a), the fluttering and vibration of the free-flat-foil 4 due to the gas flow is less prone to occur, since the free-flat-foil 4 will not be in a form exposed in the tubular hollow portion.

Furthermore in the present invention, a honeycomb member H is composed by soldering and unifying at least one layer, and preferably pluralities of layers, of one portion or the whole portion of the contacting surface of the flat foil and the corrugated foil, in the inner-circumference axis direction of the honeycomb member H, which includes the portion of the innermost circumference of the honeycomb member having aforementioned free-flat-foil 4 pressed on, as shown in FIG. 5(b). As a result of conducting such a soldering process, the aforementioned free-flat-foil 4 is united with the tubular flat foil in the inner circumference by being provided with the soldered portion 13a. This is the most effective means with respect to the disposal of the free-flat-foil 4, and it is possible to make a metal carrier with a construction suppressing the chipping and loss of the free-flat-foil constituting the honeycomb, to the limit. It is preferred that the soldering of the innermost layer of the honeycomb member is done across the whole portion of the contacting surface of the flat foil and the corrugated foil in the axial direction of the honeycomb body.

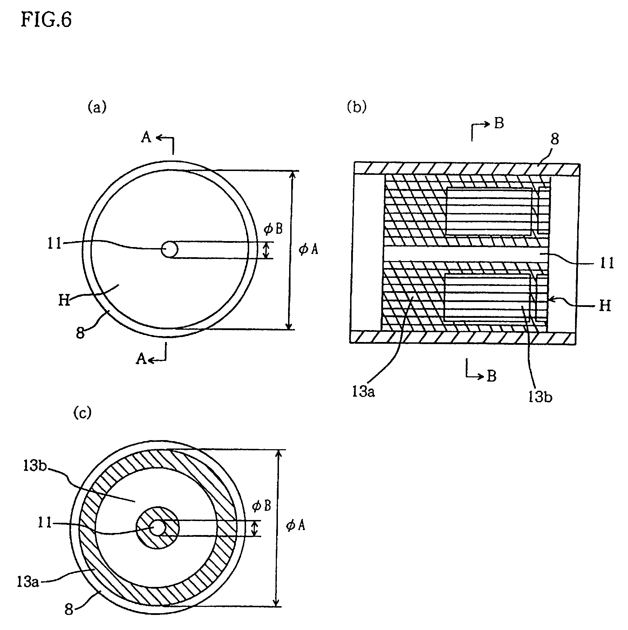

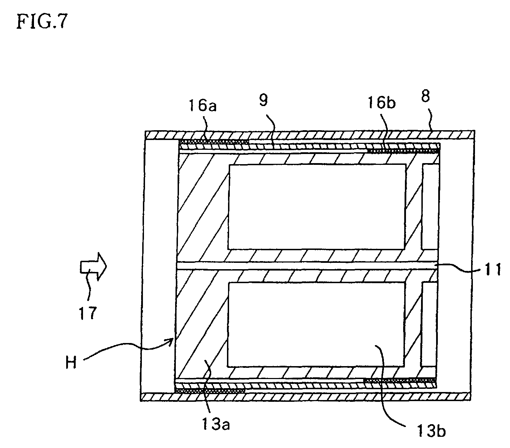

FIG. 6(a) is a drawing of a metal carrier provided with a honeycomb member H with the free-flat-foil processed as in FIG. 5(a), and FIG. 6(b) shows a sectional view of the state seen from the A-A line in the axial direction in FIG. 6(a). FIG. 6(c) is a longitudinal sectional view of the tubular metal carrier, in the direction orthogonal to the axial direction seen at the B-B position. In FIG. 6(c), the soldered and not-soldered areas are shown, but the drawing of the honeycomb structure has been omitted because the drawing will become complicated. In the metal carrier of the present invention, a disposal of the aforementioned free-flat-foil can be done almost in perfection, by having at least one layer, and preferably pluralities of layers of the inner circumference portion of the honeycomb member H including the free-flat-foil, soldered and united along the whole portion of the contacting surface in the axial direction of the honeycomb member. In the embodiment shown in FIG. 6(b), the honeycomb member H has a soldered portion 13a and a non-soldered portion 13b (the portion not soldered). In this embodiment, the innermost layer of the honeycomb member and the vicinity are soldered on the whole portion in the axial direction, and a part of the layer is also soldered on the whole portion in the radial direction. Furthermore, the outermost layer of the honeycomb member and the vicinity are also soldered on the whole portion in the axial direction. The non-soldered portion 13b in FIG. 6, and the non-soldered portion 13b in FIG. 7, which is described in the following, can be provided by known methods that mask the portions 13b to prevent adhesives or soldering powders from sticking onto them, for example.

Furthermore, an eccentric axis core 6 of approximately 5mm in diameter can be used as an axis core for holding the end portion of the flat foil 1, as another embodiment of this invention. The eccentric axis core 6 has a structure with a partitioning slit formed by being partially-divided at a portion where it is 1/3 to 1/5 of the diameter away from the outer circumference, as seen in the cross section, and at a portion one to two mm in width. When winding, the end portion of the flat foil 1 is held at the aforementioned partially-divided portion, and the honeycomb member H is completed by repeating this winding. The aforementioned partially-divided axis core 6 is extracted, when the aforementioned winding-process has been completed. After the extraction, the front end portion of the flat foil 1 traversing in the chord direction of the hollow portion of the honeycomb member H, remains as a free-flat-foil 4, as shown in FIG. 4(b). When using an ordinary axis core like the ones shown in FIGS. 1 and 2, the free-flat-foil 4 is located in a diameter portion of the tubular hollow portion, and the length of the free-flat-foil 4 is the same as the diameter of the tubular hollow portion. However, with this embodiment, the length of the free-flat-foil portion can be made minimum, because an eccentric axis core 6 is used. Drawback caused by the aforementioned free-flat-foil can be kept to a minimum, by pressing the aforementioned free-flat-foil 4 along the innermost circumference portion of the metal carrier. Since the free-flat-foil 4 is eccentric inside the tubular hollow portion at a starting portion, it is easy to press the foil 4 onto the innermost circumference portion, as shown in FIG. 4(c). This means is aimed at minimizing the free-flat-foil formed in the manufacturing process, and is very effective means for disposing the free-flat-foil portion.

In the present invention, it has become easily understand that the free-flat-foil 4 is less prone to being fluttered or vibrated even in the gas flow, by soldering and uniting at least one of the innermost layers of the hollow metal honeycomb member, along one portion or the whole portion of the contacting surface in the axial direction of the aforementioned hollow metal honeycomb member, even in a condition with the free-flat-foil 4 still remaining inside the tubular hollow portion 11. The fluttering and vibration of the free-flat-foil 4 are caused not only by the fact that the free-flat-foil 4 itself exists inside the tubular hollow portion 11 in a traversing state in the radial direction or the chord direction, in other words, is exposed in a hollow portion, but by the fact that the tubular flat foil, which is continuous with the free-flat-foil 4 in the innermost circumference of the tubular hollow portion 11, is not fixed to the surroundings, also promotes the fluttering and vibration of the free-flat-foil. Therefore, when the tubular flat foil, which is continuous with the free-flat-foil 4 in the innermost circumference of the tubular hollow portion 11, is fastened by soldering and uniting at least one of the innermost layers of the hollow metal honeycomb member, along one portion or the whole portion of the contacting surface in the axial direction of the aforementioned hollow metal honeycomb member, the free-flat-foil 4 is less prone to being fluttered or vibrated even in the gas flow. By adopting such a structure, chippings, losses and cracks can be restrained in comparison to conventional methods.

The following embodiment is proposed in the present invention in addition to the above-mentioned embodiments. When the automobile engine is driven, high-temperature gas flows into the metal carrier, and the honeycomb member H is further heated to a high temperature because the catalyst reaction is a heat generating reaction, and as a result, thermal expansion occurs. On the other hand, an outer tube 8 that supports the honeycomb member H from the outside is in contact with outside air, and maintained at a lower temperature than the honeycomb member H. Therefore, the high-temperature honeycomb member H is constrained by the low-temperature outer tube 8, and a thermal stress is generated within the honeycomb member H. Furthermore, since heating and cooling is repeated each time the engine is operated and stopped, the metal carrier is required to have anti-thermal-fatigue characteristics.

In an embodiment of the present invention representatively shown in FIG. 7, an intermediate tube 9 is arranged on the outer side of the honeycomb member H, and the outer tube 8 is arranged on the outer side of them. The honeycomb member H and the intermediate tube 9 are soldered at a soldered portion 16b on one end in the axial direction of the metal carrier, and a space is given between the honeycomb member H and the intermediate tube 9 at places other than the soldered portion 16b. The intermediate tube 9 and the outer tube 8 are also soldered at a soldering-portion 16a on the other end in the axial direction, and a space is given between the intermediate tube 9 and the outer tube 8 at places other than the soldered portion 16a. By doing in this way, when the honeycomb member H is heated to a high-temperature and thermally expands, the soldered portion 16b of the intermediate tube 9 expands corresponding to the thermal expansion of the honeycomb member H, but the soldered portion 16a of the intermediate tube 9 does not expand because the portion 16a is not in contact with the honeycomb member H. The thermal expansion of the honeycomb member H is not transmitted to the outer tube 8, and the honeycomb member H can expand without being constrained by the outer tube 8.

Processes already described above, such as removal of the free-flat-foil, pushing and pressurizing, and soldering can also be done in the embodiment shown in FIG. 7. Drawing lines indicating the layers of the honeycomb member have been omitted in FIG. 7.

The invention shown in FIG. 7 restrains a generation of thermal stress, and can improve the anti-thermal-fatigue characteristics of the metal carrier, and extend the service life durability of the metal carrier, due to the above-mentioned effects. Furthermore, insulation characteristics of the metal carrier can be improved, because two kinds of tubes, the intermediate tube 9 and the outer tube 8, are provided on the outer side of the honeycomb member H, as the tubes to support the honeycomb member H. Furthermore, noises radiated to the exterior thereby generated in the metal carrier can also be reduced.

It is preferred that the thickness of the intermediate tube 9 should be thin in order to reduce the thermal stress generated when the honeycomb member H thermally expands. It is preferred that the thickness of the intermediate tube 9 must be at least thinner than the thickness of the outer tube 8.

### EXAMPLE

A metal carrier was manufactured, by preparing a stainless steel flat foil and corrugated foil, with a thickness of 30µm, made of Fe-20Cr-5Al (YUS205M1), wound around a stainless steel outer tube, with a thickness of 1.5mm and made of Fe-19Cr-2Mo(YUS190), and making it into a honeycomb structure with a diameter of 66mm and a length of 87mm, and the junction of the aforementioned flat foil and corrugated foil, which constitute the aforementioned honeycomb structure member, was done at the end portion on the entering side of the exhaust gas , as shown in FIG. 6. An eccentric axis core 6 with a diameter of approximately 5mm for holding the end portion of the flat foil 1 was used in winding around the above-mentioned flat foil and corrugated foil, as shown in FIG. 4(a). The eccentric axis core 6 is a partially-divided eccentric axis core 6, and has the structure with the partial-dividing being done at a location where it is approximately 1/5 of the diameter away from the outer circumference of the axis core, as seen in the cross section, and at a location approximately 1 mm in width. The length of the free-flat-foil portion is kept to a minimum, by having the end portion of the flat foil 1 held at the divided portion of the partially-divided eccentric axis core 6. After the winding-process has been completed, the aforementioned partially-divided axis core 6 was extracted, and then the free-flat-foil 4 at the front end of the flat foil 1, which remained in the central portion of the honeycomb member H, was pressed along the innermost portion of the honeycomb member H, and furthermore, the end portion was soldered with a soldering material JIS B Ni-5 (Ni-19Cr-10Si). Two types were manufactured with respect to the soldering, and one type had the aforementioned free-flat-foil 4 and the innermost circumference portion of the honeycomb member H soldered, along the axial direction of the honeycomb member H. And the other type had the free-flat-foil 4 and plural layers, preferably two to three layers, in the inner circumference portion of the honeycomb member H soldered together, along the axial direction of the honeycomb member H. By soldering thereof in such a way, a complete disposal of the free-flat-foil 4 was completely done and it was made possible to improve the rigidity of the honeycomb member H by the aforementioned soldering.

### INDUSTRIAL APPLICABILITY

As mentioned above, with this invention, it is possible to provide a metal carrier that can be installed in an exhaust gas system of an automotive engine, and which has a construction that carries the aforementioned catalysts so that the function sufficiently, and which has sufficient strength against the pressures of high-temperature exhaust gas or the vibration of the engine, and which is also provided with sufficient anti-thermal-fatigue characteristics to withstand even-more severe temperature changes.

## Claims

1. A metal carrier for an automotive exhaust gas purifying catalyst, **characterized by** comprising:
a metal honeycomb member having a flat metal foil and a corrugate-processed metal foil piled and wound around in spiral form; and
a metal outer tube surrounding said metal honeycomb member, wherein
said honeycomb member is composed by hollowing out and removing a free-flat-foil used at the beginning of the winding of the metal foils, and traversing a tubular hollow portion of said honeycomb member in a diameter or chord direction, and ϕB is set such that ϕB ≤ 10/100 × ϕA, where an outer diameter of said honeycomb member is ϕA, and an inner diameter thereof is ϕB.

2. The metal carrier for an automotive exhaust gas purifying catalyst according to claim 1, wherein
at least an innermost layer of said honeycomb member is soldered and united, along one portion or the whole portion of a contacting surface in an axial direction of said honeycomb member, after the free-flat-foil in the tubular hollow portion of said honeycomb member is processed mechanically and hollowed out and removed in the axial direction.

3. A metal carrier for an automotive exhaust gas purifying catalyst **characterized by** comprising:
a metal honeycomb member having a flat metal foil and a corrugate-processed metal foil piled and wound around in spiral form; and
a metal outer tube surrounding said metal honeycomb member, wherein
said honeycomb member is composed by pushing and pressurizing a free-flat-foil used at the beginning of the winding of the metal foils, and traversing a tubular hollow portion of said honeycomb member in a radial direction or chord direction, along an innermost circumference portion, and ϕB is set such that ϕB ≤ 10/100 × ϕA, where an outer diameter of said honeycomb member is ϕA, and an inner diameter thereof is ϕB.

4. The metal carrier for an automotive exhaust gas purifying catalyst according to claim 3, wherein
at least an innermost layer of said honeycomb member including said flat foil is soldered and united, along one portion or the whole portion of a contacting surface in an axial direction of said honeycomb member, after the free-flat-foil in the tubular hollow portion of said honeycomb member is pushed and pressurized along the innermost circumference portion.

5. The metal carrier for an automotive exhaust gas purifying catalyst according to claim 3 or claim 4, wherein
the free-flat-foil traversing the tubular hollow portion of said honeycomb member is eccentric in relation to the tubular hollow portion.

6. A metal carrier for an automotive exhaust gas purifying catalyst **characterized by** comprising:
a metal honeycomb member having a flat metal foil and a corrugate-processed metal foil piled and wound around in spiral form; and
a metal outer tube surrounding said metal honeycomb member, wherein
said honeycomb member has a free-flat-foil used at the beginning of the winding of the metal foils, and traversing a tubular hollow portion of said honeycomb member in a radial direction or chord direction,
at least an innermost layer of said honeycomb member is soldered and united along one portion or the whole portion of a contacting surface in an axial direction of said honeycomb member, and
ϕB is set such that ϕB ≤ 10/100 × ϕA, where an outer diameter of said honeycomb member is ϕA, and an inner diameter thereof is ϕB.

7. The metal carrier for an automotive exhaust gas purifying catalyst according to any one of the claims 1 to 6, wherein
an intermediate tube is provided between said honeycomb member and said outer tube, and said honeycomb member and said intermediate tube are composed to be soldered at a soldered portion at one end in the axial direction of the metal carrier, and said intermediate tube and said outer tube are composed to be soldered at another soldered portion at the other end in the axial direction.

8. A manufacturing method of a metal carrier for an automotive exhaust gas purifying catalyst provided with a metal honeycomb member having a flat metal foil and a corrugate-processed metal foil piled and wound around in spiral form, and a metal outer tube surrounding said metal honeycomb member,
said manufacturing method is **characterized in that**,
said honeycomb member is a metal honeycomb member having an outer diameter of ϕA, and having a tubular hollow portion in an innermost circumference with a diameter of ϕB, where ϕB is set such that ϕB ≤ 10/100 × ϕA; and
**in that** said manufacturing method comprises the steps of:
starting the winding of the metal foils by inserting a front end of the flat foil into a partitioning slit of an axis core having said partitioning slit;
removing the axis core after the completion of the winding; and
cutting-off and removing a free-flat-foil, which has been the flat foil inserted into said partitioning slit and exposed in a tubular hollow portion.

9. A manufacturing method of a metal carrier for an automotive exhaust gas purifying catalyst provided with a metal honeycomb member having a flat metal foil and a corrugate-processed metal foil piled and wound around in spiral form, and a metal outer tube surrounding said metal honeycomb member; and
said manufacturing method is **characterized in that**,
said honeycomb member is a metal honeycomb member having an outer diameter of ϕA, and having a tubular hollow portion in the innermost circumference with a diameter of ϕB, where ϕB is set such that ϕB ≤ 10/100 × ϕA; and
**in that** said manufacturing method comprises the steps of:
starting the winding of the metal foils by inserting a front end of the flat foil into a partitioning slit of an axis core having said partitioning slit;
removing the axis core after the completion of the winding; and
pressing a free-flat-foil, which is the flat foil inserted into said partitioning slit and exposed in the tubular hollow portion, against the tubular hollow portion in an innermost circumference of said honeycomb member.

10. The manufacturing method of a metal carrier for an automotive exhaust gas purifying catalyst according to claim 9, wherein
at least an innermost layer of said honeycomb member including the pressed portion of said free-flat-foil in the innermost circumference of said honeycomb member, is soldered and united along one portion or the whole portion of a contacting surface in an axial direction.

11. The manufacturing method of a metal carrier for an automotive exhaust gas purifying catalyst according to claims 9 or 10, wherein
said axis core is an eccentric axis core, with the partitioning slit installed eccentric to the center of the axis core.
